(19) **Europäisches Patentamt / European Patent Office / Office européen des brevets**

(11) **EP 4 119 610 B1**

(12) **EUROPEAN PATENT SPECIFICATION**

(45) Date of publication and mention
of the grant of the patent:
**29.07.2026 Bulletin 2026/31**

(21) Application number: **21866619.6**

(22) Date of filing: **01.09.2021**

(51) International Patent Classification (IPC):
***C08J 5/04*** *(2006.01)*   ***C08K 9/06*** *(2006.01)*
***C08K 7/14*** *(2006.01)*

(52) Cooperative Patent Classification (CPC):
(C-Sets available)
**C08J 5/043; C08K 9/06;** C08J 2367/02;
C08J 2377/02; C08J 2381/04; C08K 7/14   (Cont.)

(86) International application number:
**PCT/JP2021/032095**

(87) International publication number:
**WO 2022/054660 (17.03.2022 Gazette 2022/11)**

(54) **GLASS FIBER-REINFORCED RESIN PLATE**

GLASFASERVERSTÄRKTE HARZPLATTE

PLAQUE DE RÉSINE RENFORCÉE PAR DES FIBRES DE VERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2020 JP 2020152951**

(43) Date of publication of application:
**18.01.2023 Bulletin 2023/03**

(73) Proprietor: **Nitto Boseki Co., Ltd.
Fukushima-shi
Fukushima 960-8161 (JP)**

(72) Inventors:
• **SASAMOTO, Taiki
Fukushima-shi, Fukushima 960-8161 (JP)**
• **NUKUI, Yosuke
Fukushima-shi, Fukushima 960-8161 (JP)**

(74) Representative: **Schön, Christoph
Dr. Schön, Neymeyr & Partner mbB
Bavariaring 26
80336 München (DE)**

(56) References cited:
WO-A1-2015/029780   WO-A1-2017/131018
WO-A1-2020/004597   WO-A1-2020/137004
JP-A- 2002 105 333   JP-A- 2003 268 224
JP-A- 2009 292 953   JP-A- 2010 222 486
JP-A- 2011 016 902   JP-A- 2013 103 981
JP-A- 2019 094 466   JP-A- 2019 209 509
US-A1- 2010 009 158   US-A1- 2015 080 516

(52) Cooperative Patent Classification (CPC): (Cont.)

C-Sets
**C08K 9/06, C08L 77/02;**
C08K 7/14, C08L 77/02

**Description**

Technical Field

The present invention relates to a glass fiber-reinforced resin plate.

Background Art

Glass fiber-reinforced resin molded articles comprising glass fiber having a flat cross-sectional shape are widely used in light, thin, short, and small materials such as portable electronic device cases since having suppressed occurrence of warpage and excellent dimensional stability as compared with those in glass fiber-reinforced resin molded articles comprising glass fiber having a circular cross section (e.g., see Patent Literature 1).

Meanwhile, composite materials of a metal and a plate-like fiber-reinforced resin molded article are recently attracting attention mainly in automobile applications (e.g., see Patent Literature 2).

JP 2013 103981 A discloses a glass fiber reinforcement polycarbonate resin using glass fibers, said glass fibers being characterized in that the ratio D1/D2 of the major axis D1 of a cross section and the minor axis D2 is 1.0-1.1, the mean fiber length is 30-70 $\mu$m, the aspect ratio L/D1 of the mean fiber length L and the major axis D1 is 2-7, and methacrylic silane is adhered by 0.03-0.20 mass%.

JP 2009 292953 A discloses a fiber-reinforced polycarbonate resin composition which comprises 100 parts by mass of a resin composition consisting of 40-95 mass% of a resin component (A) consisting of (a-1) a polycarbonate resin or (a-2) an alloy of a polycarbonate resin and a styrenic resin, 4-40 mass% of glass fibers (B), wherein a mean value of ratios (major diameter/minor diameter) of the major diameter to the minor diameter in the fiber cross-section is 2.5-6, and 1-30 mass% of carbon fibers (C), and 0.3-5 parts by mass of a surface-modified resin (D) having one or more functional groups selected from (d-1) a phenoxy resin and (d-2) an epoxy resin.

JP 2010 222486 A discloses a flame-retardant glass fiber-reinforced polyamide resin composition which comprises, based on 100 parts by mass of a flame-retardant resin composition comprising 60-90 mass% of a polyamide resin (A) and 40-10 mass% of a halogen-free flame retardant (B): 60-210 parts by mass of a flat glass fiber roving (C); and 0.01-0.5 parts by mass of a phosphorus antioxidant (D), wherein the polyamide resin (A) contains a crystalline polyamide resin (a1) and an amorphous polyamide resin (a2); the halogen-free flame retardant (B) comprises a phosphinate (b1) and/or a diphosphinate (b2) and a reaction product (b3) of phosphoric acid with melamine; and $0.1 \leq (a2)/(A) \leq 0.5$ is satisfied.

US 2015/080516 A1 discloses a polyamide resin composition for a portable electronic device, including (A) a polyamide resin, (B) a glass fiber having an elongated cross-section with an aspect ratio, defined by the formula shown below, of 2.5 or more, and optionally (C) a glass fiber having a circular cross-section with a diameter of 3 to 30 $\mu$m, wherein the ratio (by weight) of the component (B) to the component (c) is 3:7 to 10:0, wherein the proportion of the component (A) is 60 to 34% by weight, and the proportion of the component (B) or the proportion of the sum of the components (B) and (C) is 40 to 66% by weight with the proviso that the total sum of the above components is 100% by weight, and wherein the polyamide composition shows a tensile strength of 200 MPa or higher as measured for an ISO test piece thereof:

Aspect ratio = (Major axis length D2 of the cross-section of the glass fiber)/(Minor axis length D1 of the cross-section of the glass fiber).

WO 2020/004597 A1 discloses a resin metal composite body which comprises a metal member and a resin member that is formed from a resin forming material that contains a resin mixture (a1) and an inorganic filler (a2), and which is configured such that in a tensile test of a test piece that is formed from the resin mixture (a1) in accordance with ISO 527-1, 2 (2012), the stress-strain curve has a yield point and the tensile yield stress of the test piece is 25 MPa or more.

US 2010/009158 A1 discloses a fiber-reinforced thermoplastic resin molded article of a thermoplastic resin composition comprising from 70 to 35% by weight of a thermoplastic resin (A), and from 30 to 65% by weight of reinforcing fibers (B) of which the cross section is flattened to have a degree of flatness, as expressed by the formula mentioned below, of at least 2.3, wherein the weight-average fiber length of the reinforcing fibers in the molded article is at least 1 mm:

Degree of flatness=major diameter of reinforcing fiber (a)/minor diameter of reinforcing fiber (b).

Citation List

Patent Literature

Patent Literature 1: Japanese Patent Laid-Open No. 2010-84007
Patent Literature 2: WO 2018/182038

Summary of Invention

Technical Problem

Since having not only excellent dimensional stability, but also high mechanical strength as compared with that in the glass fiber-reinforced resin molded article comprising glass fiber having a circular cross section, the glass fiber-reinforced resin plate comprising glass fiber having a flat cross-sectional shape is considered to be available for composite material with metal applications.

However, when the glass fiber-reinforced resin plate comprising glass fiber having a flat cross-sectional shape is used in a composite material of a metal and a fiber-reinforced resin molded article that is thicker than conventionally used light, thin, short, and small materials such as portable electronic device cases, there is a disadvantage that the elastic modulus in the TD direction of the glass fiber-reinforced resin plate is insufficient.

When the elastic modulus in the TD direction of the glass fiber-reinforced resin plate is insufficient, an imbalance occurs between the elastic modulus in the TD direction and the elastic modulus in the MD direction, and due to this imbalance, the adhesiveness between the metal and the glass fiber-reinforced resin plate is reduced. Note that the TD direction refers to a direction orthogonally intersects the flow direction of a resin composition when a resin composition comprising glass fiber is molded to produce a glass fiber-reinforced resin plate. Moreover, the MD direction refers to the flow direction of a resin composition when a resin composition comprising glass fiber is molded to produce a glass fiber-reinforced resin plate.

Therefore, an object of the present invention is to eliminate such a disadvantage to provide a glass fiber-reinforced resin plate that comprises glass fiber having a flat cross-sectional shape and has an improved elastic modulus in the TD direction.

Solution to Problem

In order to achieve the object, the present invention provides a glass fiber-reinforced resin plate comprising glass fiber having a flat cross-sectional shape and a resin, wherein the glass fiber having a flat cross-sectional shape has a minor axis in the range of 4.5 to 10.5 $\mu$m, a major axis in the range of 22.0 to 80.0 $\mu$m, and a ratio of the above major axis to the above minor axis (major axis/minor axis) R in the range of 5.5 to 6.5; a glass fiber content C in the above glass fiber-reinforced resin plate is in the range of 5.0 to 75.0% by mass; a number average fiber length L of the glass fiber included in the glass-fiber reinforced resin plate is in the range of 100 to 700 $\mu$m; a thickness H of the above glass fiber-reinforced resin plate is in the range of more than 0.5 mm and 10.0 mm or less; the C, L and H satisfy a following formula (a):

$$0.31 \leq (C/L)^{(1/2)} \times H \leq 1.01 \qquad ...(a);$$

and the above C and H satisfy the following formula (1).

$$30.0 \leq H \times C \leq 120.0 \quad ...(1).$$

The glass fiber-reinforced resin plate of the present invention comprises glass fiber having a flat cross-sectional shape and a resin. Here, in the above glass fiber having a flat cross-sectional shape, the minor axis is in the range of 4.5 to 10.5 $\mu$m, the major axis is in the range of 22.0 to 80.0 $\mu$m, and the ratio of the above major axis to the above minor axis (major axis/minor axis) R is in the range of 5.5 to 6.5.

In the glass fiber-reinforced resin plate comprising the above glass fiber having a flat cross-sectional shape, it is feared that the elastic modulus in the TD direction may be insufficient, resulting in an imbalance between the elastic modulus in the TD direction and the elastic modulus in the MD direction, and due to this imbalance, the adhesiveness to metal may decrease.

However, the glass fiber content C being in the range of 5.0 to 75.0% by mass, the thickness H being in the range of more than 0.5 mm and 10.0 mm or less, and the above C and H satisfying the following formula (1) allow the glass fiber-reinforced resin plate of the present invention to have an improved elastic modulus in the TD direction. Here, "allow ... to have an improved elastic modulus in the TD direction" means that, when the elastic modulus in the TD direction of the glass fiber-reinforced resin plate of the present invention is compared with the elastic modulus in the TD direction of the glass fiber-reinforced resin plate as the comparison object, the elastic modulus in the TD direction is improved by 5.0% or more. The above glass fiber-reinforced resin plate of the comparison object uses glass fiber having a flat cross-sectional shape that has the same cross-sectional area as the glass fiber used in the glass fiber-reinforced resin plate of the present invention and has a ratio of the major axis to the minor axis (major axis/minor axis) R of 4.0; has the same glass fiber content C and thickness H as the glass fiber-reinforced resin plate of the present invention; and is produced by the same molding conditions as those of the glass fiber-reinforced resin plate of the present invention.

$$30.0 \leq H \times C \leq 120.0 \quad ...(1)$$

The glass fiber-reinforced resin plate of the present invention cannot have an improved elastic modulus in the TD direction with the product of the above C and H being less than 30.0 or more than 120.0, when the glass fiber content C and the thickness H are in the above range.

In the glass fiber-reinforced resin plate of the present invention, it is preferable that the above glass fiber content C be in the range of 20.0 to 60.0% by mass, the above thickness H of the glass fiber-reinforced resin plate be in the range of 0.8 to 8.0 mm, and the above C and H satisfy the following formula (2). The above C and H being in the above range and satisfying the following formula (2) allow the glass fiber-reinforced resin plate of the present invention to have a further improved elastic modulus in the TD direction. Here, "allow ... to have a further improved elastic modulus in the TD direction" means that, when the elastic modulus in the TD direction of the glass fiber-reinforced resin plate of the present invention is compared with the elastic modulus in the TD direction of the glass fiber-reinforced resin plate as the above comparison object, the elastic modulus in the TD direction is improved by 10.0% or more.

$$45.0 \leq H \times C \leq 80.0 \quad ...(2)$$

In order to further improve the elastic modulus in the TD direction, it is further preferable in the glass fiber-reinforced resin plate of the present invention that the glass fiber content C be in the range of 20.0 to 40.0% by mass, the thickness H of the glass fiber-reinforced resin plate be in the range of 1.6 to 5.0 mm, and the C and H satisfy the following formula (3).

$$55.0 \leq H \times C \leq 74.5 \quad ...(3)$$

In order to improve the elastic modulus in the TD direction, in the glass fiber-reinforced resin plate of the present invention, the resin contained in the glass fiber-reinforced resin plate is preferably a crystalline thermoplastic resin, and further preferably polyamide.

Description of Embodiments

Hereinafter, embodiments of the present invention will be described in detail.

The glass fiber-reinforced resin plate of the present embodiment is a molded article comprising glass fiber having a flat cross-sectional shape and a resin.

In the glass fiber-reinforced resin plate of the present embodiment, the glass composition of glass forming the glass fiber is not particularly limited. In the glass fiber-reinforced resin plate of the present embodiment, examples of the glass composition that may be taken by the glass fiber include the most common E glass composition, a high strength and high modulus glass composition, a high modulus and easily-producible glass composition, and a low dielectric constant and low dielectric tangent glass composition.

The above E glass composition is a composition including $SiO_2$ in the range of 52.0 to 56.0% by mass, $Al_2O_3$ in the range of 12.0 to 16.0% by mass, MgO and CaO in the range of 20.0 to 25.0% by mass in total, and $B_2O_3$ in the range of 5.0 to 10.0% by mass, with respect to the total amount of the glass fiber.

The above high strength and high modulus glass composition is a composition including $SiO_2$ in the range of 60.0 to 70.0% by mass, $Al_2O_3$ in the range of 20.0 to 30.0% by mass, MgO in the range of 5.0 to 15.0% by mass, $Fe_2O_3$ in the range of 0 to 1.5% by mass, and $Na_2O$, $K_2O$, and $Li_2O$ in the range of 0 to 0.2% by mass in total, with respect to the total amount of the glass fiber.

The above high modulus and easily-producible glass composition is a composition including $SiO_2$ in the range of 57.0 to 60.0% by mass, $Al_2O_3$ in the range of 17.5 to 20.0% by mass, MgO in the range of 8.5 to 12.0% by mass, CaO in the range of 10.0 to 13.0% by mass, and $B_2O_3$ in the range of 0.5 to 1.5% by mass, with respect to the total amount of the glass fiber, in which the total amount of $SiO_2$, $Al_2O_3$, MgO, and CaO is 98.0% by mass or more.

The above low dielectric constant and low dielectric tangent glass composition is a composition including $SiO_2$ in the range of 48.0 to 62.0% by mass, $B_2O_3$ in the range of 17.0 to 26.0% by mass, $Al_2O_3$ in the range of 9.0 to 18.0% by mass, CaO in the range of 0.1 to 9.0% by mass, MgO in the range of 0 to 6.0% by mass, $Na_2O$, $K_2O$, and $Li_2O$ in the range of 0.05 to 0.5% by mass in total, $TiO_2$ in the range of 0 to 5.0% by mass, SrO in the range of 0 to 6.0% by mass, $F_2$ and $Cl_2$ in the range of 0 to 3.0% by mass in total, and $P_2O_5$ in the range of 0 to 6.0% by mass, with respect to the total amount of the glass fiber.

From the viewpoint of improving the strength of the glass fiber-reinforced resin plate, the glass composition of the glass fiber is preferably the high strength and high modulus glass composition or the high modulus and easily-producible glass composition. From the viewpoint of lowering the dielectric constant and dielectric tangent of the glass fiber-reinforced resin plate and reducing the transmission loss of high frequency signals that pass through the glass fiber-reinforced resin plate, the glass composition of the glass fiber is preferably the low dielectric and low dielectric tangent glass composition.

Regarding measurement of the content of each component of the above glass compositions, the content of Li as the light element can be measured with an ICP emission spectroscopic analyzer, and the contents of other elements can be measured with a wavelength dispersive X-ray fluorescence analyzer. The measurement method is as follows.

First, the glass fiber is cut to an appropriate size, then placed in a platinum crucible and melted with stirring while being held at a temperature of 1550°C for 6 hours in an electric furnace to obtain a homogeneous molten glass. Next, the obtained molten glass is poured onto a carbon plate to produce a glass cullet, and then pulverized and powdered to obtain glass powder.

Regarding Li as a light element, the glass powder is thermally decomposed with an acid and then quantitatively analyzed using an ICP emission spectroscopic analyzer. Regarding other elements, the glass powder is molded into a disc shape by a pressing machine and then quantitatively analyzed using a wavelength dispersive X-ray fluorescence analyzer. These quantitative analysis results are converted in terms of oxides to calculate the content of each component and the total amount, and the above content (% by mass) of each component can be determined from these numerical values.

When organic matter adheres to the surface of the glass fiber, or when glass fiber is mainly included as a reinforcing material in organic matter (resin), the glass fiber is used after the organic matter is removed by, for example, heating for about 2 to 24 hours in a muffle furnace at 300 to 650°C.

The glass fiber comprising the above glass composition is produced as follows. First, a glass raw material (glass batch) prepared to have the above composition is supplied to a melting furnace and melted at a temperature in the range of 1450 to 1550°C, for example. Then, the melted glass batch (melted glass) is drawn from 1 to 30000 nozzle tips of a bushing controlled at a predetermined temperature and rapidly cooled to form glass filaments. Subsequently, the glass filaments formed are applied with a sizing agent or binder using an applicator as an application apparatus. While 1 to 30000 of the glass filaments are bundled using a bundling shoe, the glass filaments are wound on a tube at a high speed using a winding apparatus to obtain glass fiber.

Here, allowing the nozzle tip to have a non-circular shape and to have a protrusion or a notch for rapidly cooling the molten glass and controlling the temperature conditions can provide the glass fiber having a flat cross-sectional shape used in the glass fiber-reinforced resin plate of the present embodiment. Adjusting the diameter of the nozzle tip, winding speed, temperature conditions, and the like can adjust the minor axis and major axis of the glass fiber. For example, accelerating the winding speed can make the minor axis and major axis smaller, and reducing the winding speed can make the minor axis and major axis larger.

The glass fiber having a flat cross-sectional shape used in the glass fiber-reinforced resin plate of the present embodiment has a minor axis in the range of 4.5 to 10.5 $\mu$m, preferably 5.0 to 8.0 $\mu$m, and more preferably 5.0 to 6.4 $\mu$m, a major axis in the range of 22.0 to 80.0 $\mu$m, preferably 28.5 to 70.0 $\mu$m, more preferably 29.5 to 65.0 $\mu$m, further preferably 32.5 to 60.0 $\mu$m, and particularly preferably 32.5 to 50.0 $\mu$m, and a ratio of the major axis to the minor axis (major axis/minor axis) R in the range of 5.5 to 6.5. The above flat cross-sectional shape is preferably an oval shape or a long-oval shape, and more preferably a long-oval shape. The above long-oval shape is a shape having a semicircular shape at both ends of a rectangle, or a shape similar thereto.

The converted fiber diameter of the glass fiber having a flat cross-sectional shape used in the glass fiber-reinforced resin plate of the present embodiment is in the range of 11.0 to 32.0 $\mu$m, preferably in the range of 12.0 to 22.0 $\mu$m, more preferably in the range of 12.5 to 20.0 $\mu$m, and further preferably in the range of 13.5 to 18.0 $\mu$m. Here, the converted fiber diameter means the diameter of the glass fiber that has the same cross-sectional area as the cross-sectional area of the glass fiber having a flat cross-sectional shape and has a circular cross section.

In the glass fiber-reinforced resin plate of the present embodiment, the minor axis and major axis of the glass fiber having a flat cross-sectional shape can be, for example, calculated as follows.

First, a cross section of the glass fiber-reinforced resin plate is polished. Then, the length of the major axis and the minor axis of 100 or more glass filaments are measured using an electron microscope by taking the major axis as the longest side that passes through the substantial center of the glass filament cross section and the minor axis as the side that orthogonally intersects the major axis at the substantial center of the glass filament cross section. Then, for the above minor axis and major axis, the average values of the measured values of each length are determined, thereby calculating the minor axis and major axis of the glass fiber.

The glass fiber is usually formed by a plurality of glass filaments bundled, but in the glass fiber-reinforced resin plate, which is subjected to molding processing, the glass filaments are debundled and present dispersed in a glass filament state in the glass fiber-reinforced resin plate.

Here, examples of the preferred form of the glass fiber having a flat cross-sectional shape in the glass fiber-reinforced resin plate of the present embodiment before molding processing include chopped strands, in which the number of glass filaments constituting the glass fiber (number bundled) is preferably in the range of 1 to 20000, more preferably 50 to 10000, and further preferably 1000 to 8000 and the glass fiber (also referred to as a glass fiber bundle or glass strand) is preferably cut into a length in the range of 1.0 to 100.0 mm, more preferably 1.2 to 51.0 mm, further preferably, 1.5 to 30.0 mm, particularly preferably 2.0 to 15.0 mm, and most preferably 2.3 to 7.8 mm. In addition, examples of the form of the glass fiber having a flat cross-sectional shape in the glass fiber-reinforced resin plate of the present embodiment before molding processing include rovings, in which the number of glass filaments constituting the glass fiber is in the range of 10 to 30000 and which are obtained without cutting, and cut fiber, in which the number of glass filaments constituting the glass fiber is in the range of 1 to 20000 and which is obtained by pulverization so as to have a length of 0.001 to 0.900 mm by a known method such as a ball mill or Henschel mixer, in addition to chopped strands.

In the glass fiber-reinforced resin molded plate of the present embodiment, the glass fiber may be coated with an organic matter on the surface thereof for the purposes such as improvement of adhesiveness between glass fiber and a resin, and improvement of uniform dispersibility of glass fiber in a mixture of glass fiber and a resin or inorganic material. Examples of such organic matter include resins, silane coupling agents, and a composition including a lubricant, a surfactant, and the like in addition to a resin and a silane coupling agent. Here, the above composition may include both a resin and a silane coupling agent.

Such a composition covers the glass fiber at a rate in the range of 0.1 to 2.0% by mass based on the mass of the glass fiber in a state where it is not coated with the composition.

Examples of the above resin include urethane resins, epoxy resins, vinyl acetate resins, acrylic resins, modified polypropylene (particularly carboxylic acid-modified polypropylene), and a copolymer of (poly)carboxylic acid (particularly maleic acid) and an unsaturated monomer.

The glass fiber can be coated with an organic matter by applying the sizing agent or the binder containing the solution of the composition, the resin, or the silane coupling agent to the glass fiber using a known method such as a roller applicator, for example, in the manufacturing process of the glass fiber and then drying the glass fiber to which the solution of the composition, the resin, or the silane coupling agent is applied.

Here, examples of the silane coupling agent include aminosilanes, chlorosilanes, epoxysilanes, mercaptosilanes, vinylsilanes, acrylsilanes, and cationic silanes. As the silane coupling agent, these compounds can be used singly or in combination of two or more.

Examples of the aminosilane include γ-aminopropyltriethoxysilane, N-β-(aminoethyl)-γ-aminopropyltrimethoxysilane, N-β-(aminoethyl)-N'-β-(aminoethyl)-γ-aminopropyltrimethoxysilane, and γ-anilinopropyltrimethoxysilane.

Examples of the chlorosilane include γ-chloropropyltrimethoxysilane.

Examples of the epoxy silane include γ-glycidoxypropyltrimethoxysilane and β-(3,4-epoxy cyclohexyl)ethyltrimethoxysilane.

Examples of the mercaptosilane include γ-mercaptotrimethoxysilane.

Examples of the vinyl silane include vinyl trimethoxysilane and N-β-(N-vinylbenzylaminoethyl)-γ-aminopropyltrimethoxysilane.

Examples of the acrylsilane include γ-methacryloxypropyltrimethoxysilane.

Examples of the cationic silane include N-(vinylbenzyl)-2-aminoethyl-3-aminopropyltrimethoxysilane hydrochloride and N-phenyl-3-aminopropyltrimethoxysilane hydrochloride.

Examples of the lubricant include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. As the lubricant, these can be used singly or in combinations of two or more.

Examples of the animal oil include beef tallow.

Examples of the vegetable oil include soybean oil, coconut oil, rapeseed oil, palm oil, and castor oil. Examples of the animal wax include beeswax and lanolin. Examples of the vegetable wax include candelilla wax and carnauba wax.

Examples of the mineral wax include paraffin wax and montan wax. Examples of the condensate of a higher saturated fatty acid and a higher saturated alcohol include stearates such as lauryl stearate.

Examples of the fatty acid amide include dehydrated condensates of polyethylenepolyamines such as diethylenetriamine, triethylenetetramine, and tetraethylenepentamine and fatty acids such as lauric acid, myristic acid, palmitic acid, and stearic acid.

Examples of the quaternary ammonium salt include alkyltrimethylammonium salts such as lauryltrimethylammonium chloride.

Examples of the surfactant include nonionic surfactants, cationic surfactants, anionic surfactants, and amphoteric surfactants. As the surfactant, these compounds can be used singly or in combination of two or more.

Examples of the nonionic surfactant can include ethylene oxide propylene oxide alkyl ether, polyoxyethylene alkyl ether, polyoxyethylene-polyoxypropylene-block copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant can include alkyldimethylbenzylammonium chloride, alkyltrimethylammonium chloride, alkyl dimethyl ethyl ammonium ethyl sulfate, higher alkylamine salts (such as acetate and hydrochloride), adduct of ethylene oxide to a higher alkylamine, condensate of a higher fatty acid and polyalkylene polyamine, a salt of an ester of a higher fatty acid and alkanolamine, a salt of higher fatty acid amide, imidazoline cationic surfactant, and alkyl pyridinium salt.

Examples of the anionic surfactant can include higher alcohol sulfate salts, higher alkyl ether sulfate salts, $\alpha$-olefin sulfate salts, alkylbenzene sulfonate salts, $\alpha$-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct.

Examples of the amphoteric surfactant can include amino acid amphoteric surfactants such as alkali metal salts of alkylaminopropionic acid, betaine amphoteric surfactants such as alkyldimethylbetaine, and imidazoline amphoteric surfactants.

Examples of the resin used in the glass fiber-reinforced resin plate of the present embodiment include thermoplastic resins.

Examples of the above thermoplastic resin can include polyethylene, polypropylene, polystyrene, styrene/maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, methacrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenylsulfone (PPSU), polyphenylene ether (PPE), modified polyphenylene ether (m-PPE), polyaryl ether ketone, liquid crystal polymer (LCP), fluororesins, polyetherimide (PEI), polyarylate (PAR), polysulfone (PSF), polyamideimide (PAI), polyaminobismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, and polylactic acid.

Specific examples of the polyethylene can include high density polyethylene (HDPE), medium density polyethylene, low density polyethylene (LDPE), linear low density polyethylene (LLDPE), and ultra-high molecular weight polyethylene.

Examples of the polypropylene can include isotactic polypropylene, atactic polypropylene, syndiotactic polypropylene, and mixtures thereof.

Examples of the polystyrene can include general-purpose polystyrene (GPPS), which is an atactic polystyrene having an atactic structure, high impact polystyrene (HIPS) with a rubber component added to GPPS, and syndiotactic polystyrene having a syndiotactic structure.

Examples of the methacrylic resin can include polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester, or polymers obtained by copolymerizing two or more of these.

Examples of the polyvinyl chloride can include a vinyl chloride homopolymer, a copolymer of a vinyl chloride monomer and a copolymerizable monomer, or a graft copolymer obtained by graft polymerization of a vinyl chloride monomer to polymer polymerized by a conventionally known method such as emulsion polymerization method, suspension polymerization method, micro suspension polymerization method, or bulk polymerization method.

Examples of the polyamide can include one of components such as polycaproamide (polyamide 6), polyhexamethylene adipamide (polyamide 66), polytetramethylene adipamide (polyamide 46), polytetramethylene sebacamide (polyamide 410), polypentamethylene adipamide (polyamide 56), polypentamethylene sebacamide (polyamide 510), polyhexamethylene sebacamide (polyamide 610), polyhexamethylene dodecamide (polyamide 612), polydecamethylene adipamide (polyamide 106), polydecamethylene sebacamide (polyamide 1010), polydecamethylene dodecamide (polyamide 1012), polyundecanamide (polyamide 11), polyundecamethylene adipamide (polyamide 116), polydodecanamide (polyamide 12), polyxylene adipamide (polyamide XD6), polyxylene sebacamide (polyamide XD10), polymetaxylylene adipamide (polyamide MXD6), polyparaxylylene adipamide (polyamide PXD6), polytetramethylene terephthalamide (polyamide 4T), polypentamethylene terephthalamide (polyamide 5T), polyhexamethylene terephthalamide (polyamide 6T), polyhexamethylene isophthalamide (polyamide 6I), polynonamethylene terephthalamide (polyamide 9T), polydecamethylene terephthalamide (polyamide 10T), polyundecamethylene terephthalamide (polyamide 11T), polydodecamethylene terephthalamide (polyamide 12T), polytetramethylene isophthalamide (polyamide 4I), polybis(3-methyl-4-aminohexyl) methane terephthalamide (polyamide PACMT), polybis(3-methyl-4-aminohexyl) methane isophthalamide (polyamide PACMI), polybis(3-methyl-4-aminohexyl) methane dodecamide (polyamide PACM12), and polybis(3-methyl-4-aminohexyl) methane tetradecamide (polyamide PACM14), or copolymers obtained by combining two or more of the components, and mixtures thereof.

Examples of the polyacetal can include a homopolymer with oxymethylene units as the main repeating unit, and a copolymer mainly composed of oxymethylene units and containing oxyalkylene units having 2 to 8 adjacent carbon atoms in the main chain.

Examples of the polyethylene terephthalate can include polymers obtained by polycondensation of terephthalic acid or a derivative thereof with ethylene glycol.

Examples of the polybutylene terephthalate can include polymers obtained by polycondensation of terephthalic acid or a derivative thereof with 1,4-butanediol.

Examples of the polytrimethylene terephthalate can include polymers obtained by polycondensation of terephthalic acid or a derivative thereof with 1,3-propanediol.

Examples of the polycarbonate can include polymers obtained by a transesterification method in which a dihydroxydiaryl compound is reacted with a carbonate such as diphenyl carbonate in a molten state; or polymers obtained by phosgene method in which a dihydroxyaryl compound is reacted with phosgene.

Examples of the polyarylene sulfide can include linear polyphenylene sulfide, crosslinked polyphenylene sulfide having a high molecular weight obtained by performing a curing reaction after polymerization, polyphenylene sulfide sulfone, polyphenylene sulfide ether, and polyphenylene sulfide ketone.

Examples of the polyphenylene ether include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly[2-(4'-methylphenyl)-1,4-phenylene ether], poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly(2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether), and poly(2,6-dimethyl-1,4-phenylene ether).

Examples of the modified polyphenylene ether include a polymer alloy of poly(2,6-dimethyl-1,4-phenylene)ether and polystyrene; a polymer alloy of poly(2,6-dimethyl-1,4-phenylene)ether and a styrene/butadiene copolymer; a polymer alloy of poly(2,6-dimethyl-1,4-phenylene)ether and a styrene/maleic anhydride copolymer; a polymer alloy of poly(2,6-dimethyl-1,4-phenylene)ether and polyamide; a polymer alloy of poly(2,6-dimethyl-1,4-phenylene)ether and a styrene/-butadiene/acrylonitrile copolymer; one obtained by introducing a functional group such as an amino group, an epoxy group, a carboxy group, a styryl group, or the like at the polymer chain end of the polyphenylene ether; and one obtained by introducing a functional group such as an amino group, an epoxy group, a carboxy group, a styryl group, a methacryl group, or the like at the polymer chain side chain of the polyphenylene ether.

Examples of the polyaryl ether ketone can include polyetherketone (PEK), polyetheretherketone (PEEK), polyetherketoneketone (PEKK), and polyetheretherketoneketone (PEEKK).

Examples of the liquid crystal polymer (LCP) can include a polymer (copolymer) composed of one or more structural units selected from aromatic hydroxycarbonyl units which are thermotropic liquid crystal polyesters, aromatic dihydroxy units, aromatic dicarbonyl units, aliphatic dihydroxy units, and aliphatic dicarbonyl units.

Examples of the fluororesin can include polytetrafluoroethylene (PTFE), perfluoroalkoxy resins (PFA), fluorinated ethylene propylene resins (FEP), fluorinated ethylene tetrafluoroethylene resins (ETFE), polyvinyl fluoride (PVF), polyvinylidene fluoride (PVDF), polychlorotrifluoroethylene (PCTFE), and ethylene/chlorotrifluoroethylene resin (ECTFE).

Examples of the ionomer (IO) resin can include copolymers of an olefin or a styrene and an unsaturated carboxylic acid, wherein a part of carboxyl groups is neutralized with a metal ion.

Examples of the olefin/vinyl alcohol resin can include ethylene/vinyl alcohol copolymers, propylene/vinyl alcohol copolymers, saponified products of ethylene/vinyl acetate copolymers, and saponified products of propylene/vinyl acetate copolymers.

Examples of the cyclic olefin resin can include monocyclic compounds such as cyclohexene, polycyclic compounds such as tetracyclopentadiene, and polymers of cyclic olefin monomers.

Examples of the polylactic acid can include poly-L-lactic acid, which is a homopolymer of L-form, poly-D-lactic acid, which is a homopolymer of D-form, or a stereocomplex polylactic acid which is a mixture thereof.

Examples of the cellulose resin can include methylcellulose, ethylcellulose, hydroxycellulose, hydroxymethylcellulose, hydroxyethylcellulose, hydroxyethyl methylcellulose, hydroxypropyl methylcellulose, cellulose acetate, cellulose propionate, and cellulose butyrate.

Since the effect for improving the elastic modulus in the TD direction is high, the resin used in the glass fiber-reinforced resin plate of the present embodiment is preferably a crystalline thermoplastic resin. Examples of the crystalline thermoplastic resin include polyamides, polybutylene terephthalates, polyphenylene sulfides, polyether ether ketones, polyethylenes, and polypropylenes, and the crystalline thermoplastic resin is further preferably polyamide, and particularly preferably polyamide 6.

When the resin used in the glass fiber-reinforced resin plate of the present embodiment is the crystalline thermoplastic resin, it is preferable that the resin does not include an amorphous thermoplastic resin.

When the resin used in the glass fiber-reinforced resin plate of the present embodiment is a transparent resin, the glass fiber-reinforced resin plate of the present embodiment can have improved light transmittance of visible rays, ultraviolet rays, infrared rays, laser rays, and the like, as compared with that in the glass fiber-reinforced resin plate of the comparison object. The above glass fiber-reinforced resin plate of the comparison object uses glass fiber having a flat cross-sectional shape that has the same cross-sectional area as the glass fiber used in the glass fiber-reinforced resin plate of the present embodiment and has a ratio of the major axis to the minor axis (major axis/minor axis) R of 4.0; has the same glass fiber content C and thickness H as the glass fiber-reinforced resin plate of the present embodiment; and is produced by the same molding conditions as those of the glass fiber-reinforced resin plate of the present embodiment. Here, examples of the transparent resin include polystyrenes, ABS resins, (meth)acrylic resins, polyacetals, polyethylene terephthalates, polycarbonates, and polyarylates.

The glass fiber-reinforced resin plate of the present embodiment can be obtained by, for example, kneading chopped strands having a predetermined length obtained by bundling the glass filaments of the glass fiber having a flat cross-sectional shape and the above resin by a twin-screw kneader, and conducting injection molding using the obtained resin pellets. The glass fiber-reinforced resin plate of the present embodiment can be obtained by a known molding method such as injection compression molding method, two-color molding method, hollow molding method, foam molding method (including supercritical fluid foam molding method), insert molding method, in-mold coating molding method, extrusion molding method, sheet molding method, thermal molding method, rotational molding method, laminate molding method, press molding method, blow molding method, stamping molding method, infusion method, hand lay-up method, spray-up method, resin transfer molding method, sheet molding compound method, bulk molding compound method, pultrusion method, and filament winding method. The shape of the glass fiber-reinforced resin plate of the present embodiment obtained as described above may be a flat plate, a flat plate having holes or unevenness, or a plate having a curved plane or a bend. Here, as one aspect of the plate having a curved plane or a bend, a hollow cylindrical body, a polygonal prism, and a box are included.

The glass fiber content C being in the range of 5.0 to 75.0% by mass, thickness H being in the range of more than 0.5 mm and 10.0 mm or less, and the above C and H satisfying the following formula (1) allow the glass fiber-reinforced resin plate of the present embodiment to have an improved elastic modulus in the TD direction.

$$30.0 \leq H \times C \leq 120.0 \quad ...(1)$$

In the glass fiber-reinforced resin plate of the present embodiment, the glass fiber content C is preferably in the range of 20.0 to 60.0% by mass, more preferably in the range of 20.0 to 40.0% by mass, and further preferably in the range of 21.0 to 38.0% by mass. In the glass fiber-reinforced resin plate of the present embodiment, the thickness H of the glass fiber-reinforced resin plate is preferably in the range of 0.8 to 8.0 mm, more preferably in the range of 1.6 to 5.0 mm, further preferably in the range of 1.6 to 3.4 mm, and particularly preferably in the range of 1.6 to 2.4 mm. In the glass fiber-reinforced resin plate of the present embodiment, the above C and H preferably satisfy the following formula (2), more preferably satisfy the following formula (3), further preferably satisfy the following formula (4), particularly preferably satisfy the following formula (5), extremely preferably satisfy the following formula (6), and most preferably satisfy the following formula (7).

$$45.0 \leq H \times C \leq 80.0 \quad ...(2)$$

$$55.0 \leq H \times C \leq 74.5 \quad ...(3)$$

$$59.0 \leq H \times C \leq 72.0 \quad ...(4)$$

$$59.0 \leq H \times C \leq 69.0 \quad ...(5)$$

$$59.0 \leq H \times C \leq 66.0 \quad ...(6)$$

$$59.0 \leq H \times C \leq 64.0 \quad ...(7)$$

The number average fiber length L of the glass fiber included in the glass fiber-reinforced resin plate of the present embodiment is in the range of 100 to 700 $\mu$m, preferably in the range of 150 to 450 $\mu$m, more preferably in the range of 200 to 400 $\mu$m, and further preferably in the range of 220 to 380 $\mu$m.

Here, when the glass fiber-reinforced resin plate of the present embodiment is obtained by injection molding, the number average fiber length L of the glass fiber included in the glass fiber-reinforced resin plate of the present embodiment can be controlled by adjusting, for example, the length of the chopped strands to be charged into a twin-screw kneader or the screw rotation speed of the twin-screw kneader. For example, L can be made longer by making the length of the chopped strands to be charged into a twin-screw kneader longer, and L can be made shorter by making the length of the chopped strands shorter. L can be made longer by lowering the screw rotation speed during twin-screw kneading, and can be made shorter by elevating the rotation speed, within the range of 10 to 1000 rpm.

Here, the glass fiber content C, the thickness H of the glass fiber-reinforced resin plate, and the number average fiber length L of the glass fiber satisfies the following formula (a), preferably satisfies the following formula (b), more preferably satisfies the following formula (c), particularly preferably satisfies the following formula (d), and most preferably satisfies the following formula (e).

$$0.31 \leq (C/L)^{(1/2)} \times H \leq 1.01 \quad ...(a)$$

$$0.41 \leq (C/L)^{(1/2)} \times H \leq 0.71 \quad ...(b)$$

$$0.46 \leq (C/L)^{(1/2)} \times H \leq 0.71 \quad ...(c)$$

$$0.51 \leq (C/L)^{(1/2)} \times H \leq 0.71 \quad ...(d)$$

$$0.56 \leq (C/L)^{(1/2)} \times H \leq 0.66 \quad ...(e)$$

Examples of applications of the glass fiber-reinforced resin plate of the present embodiment include, but are not limited to, plate-like metal substitute materials for automobiles and composite materials of a metal and a plate-like fiber-reinforced resin molded article for automobile applications. The glass fiber-reinforced resin plate of the present embodiment can be preferably used for, for example, automobile exterior parts such as front fenders and door panels, automobile interior parts such as trims and glove boxes, and automobile gear parts such as cylinder head covers and radiator tanks.

Then, Examples, Comparative Examples, and Reference Examples of the present invention will be shown.

Examples

[Example 1]

In the present example, chopped strands having a long-oval cross-sectional shape in which the major axis was 34.1 $\mu$m, the minor axis was 5.7 $\mu$m, the major axis/minor axis R was 6.0, and the converted fiber diameter was 15.4 $\mu$m, having an E glass composition, being formed by glass filaments bundled, being coated with a silane coupling agent composition, and having a length of 50 mm, and polyamide 6 (manufactured by Ube Industries, Ltd., trade name: UBE Nylon 1015B, described as PA in Table 1) were kneaded with a screw rotation speed of 100 rpm in a twin-screw kneader (manufactured by SHIBAURA MACHINE CO., LTD., trade name: TEM-26SS) to thereby produce resin pellets having a glass content C of 40% by mass.

Then, the resin pellets obtained in the present example were used to conduct injection molding in an injection molding apparatus (manufactured by Nissei Plastic Industrial Co. Ltd., trade name: NEX80) at a mold temperature of 90°C and an injection temperature of 270°C to thereby produce a glass fiber-reinforced resin plate (flat plate) having a size of 80 mm in length × 60 mm in width and a thickness H of 1.0 mm.

Then, as for the glass fiber-reinforced resin plate (flat plate) obtained in the present example, the flexural modulus in the TD direction and the flexural modulus in the MD direction were each measured by the methods described below, and the number average fiber length L of the glass fiber in the glass fiber-reinforced resin plate was calculated. The results are shown in Table 1.

[Flexural modulus in TD direction]

The glass fiber-reinforced resin plate was processed into a size of 25 mm in width × 20 mm in length such that the length direction of the test piece corresponds to the TD direction of the glass fiber-reinforced resin plate and the width direction of the test piece corresponds to the MD direction of the glass fiber-reinforced resin plate to thereby produce a test piece. Then, the obtained test piece was subjected to a static bending test in accordance with JIS K 7171:2016 under a condition of test temperature of 23°C using a precision universal tester (manufactured by Shimadzu Corporation, trade name: Autograph AG-XPlus) to measure the flexural modulus in the TD direction.

[Flexural modulus in MD direction]

The glass fiber-reinforced resin plate was processed into a size of 25 mm in width × 20 mm in length such that the length direction of the test piece corresponds to the MD direction of the glass fiber-reinforced resin plate and the width direction of the test piece corresponds to the TD direction of the glass fiber-reinforced resin plate to thereby produce a test piece. Then, the obtained test piece was subjected to a static bending test in accordance with JIS K 7171:2016 under a condition of test temperature of 23°C using a precision universal tester (manufactured by Shimadzu Corporation, trade name: Autograph AG-XPlus) to measure the flexural modulus in the MD direction.

[Number average fiber length L of glass fiber]

The number average fiber length L of the glass fiber in the glass fiber-reinforced resin plate was calculated by the following method. First, the glass fiber-reinforced resin plate was heated in a muffle furnace at 650°C for 0.5 to 24 hours to decompose organic matter. Then, the remaining glass fiber was transferred to a glass petri dish, and the glass fiber was dispersed using acetone on the surface of the petri dish. Subsequently, the fiber length of 1000 or more glass fiber filaments dispersed on the petri dish surface was measured using a stereoscopic microscope and averaged to calculate the number average fiber length L of the glass fiber. In Tables 1 to 3, the number average fiber length L of the glass fiber is described as "the number average fiber length L".

In Tables 1 to 3, the improvement rate of the flexural modulus in the TD direction (%) and the improvement rate of the flexural modulus in the MD direction (%) are respectively the improvement rate to the flexural modulus in the TD direction (GPa) and the flexural modulus in the MD direction (GPa) of the corresponding reference example, and the anisotropy improvement rate (%) is the improvement rate to the anisotropy of the corresponding reference example. In Tables 1 to 3, the difference between the improvement rate of the flexural modulus in the TD direction and the improvement rate of the flexural modulus in the MD direction (the improvement rate of the flexural modulus in the TD direction - the improvement rate of the flexural modulus in the MD direction) is described as "flexural modulus improvement rate difference".

[Reference Example 1]

The present reference example is a reference example corresponding to Example 1, and resin pellets having a glass content C of 40% by mass were produced in the entirely same manner as in Example 1, except that chopped strands having a long-oval cross-sectional shape in which the major axis was 28.0 μm, the minor axis was 7.0 μm, the major axis/minor axis R was 4.0, and the converted fiber diameter was 15.4 μm, and being formed by the glass filaments bundled were used.

Then, a glass fiber-reinforced resin plate (flat plate) was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 1.

[Example 2]

In the present example, resin pellets were produced in the entirely same manner as in Example 1, except that the glass content C was 50% by mass. Then, a glass fiber-reinforced resin plate (flat plate) having a size of 20 mm in length × 25 mm in width and a thickness H of 1.0 mm was produced in the entirely same manner as in Example 1, except that the resin pellets obtained in the present example were used.

Then, as for the glass fiber-reinforced resin plate (flat plate) obtained in the present example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 1.

[Reference Example 2]

The present reference example is a reference example corresponding to Example 2, and resin pellets were produced in the entirely same manner as in Reference Example 1, except that the glass content C was 50% by mass. Then, a glass fiber-reinforced resin plate (flat plate) having a size of 20 mm in length × 25 mm in width and a thickness H of 1.0 mm was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 1.

[Example 3]

In the present example, resin pellets were produced in the entirely same manner as in Example 1, except that the glass content C was 30% by mass. Then, a glass fiber-reinforced resin plate (flat plate) having a size of 40 mm in length × 25 mm in width and a thickness H of 2.0 mm was produced in the entirely same manner as in Example 1, except that the resin pellets obtained in the present example were used.

Then, as for the glass fiber-reinforced resin plate (flat plate) obtained in the present example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 1.

[Reference Example 3]

The present reference example is a reference example corresponding to Example 3, and resin pellets were produced in the entirely same manner as in Reference Example 1, except that the glass content C was 30% by mass. Then, a glass fiber-reinforced resin plate (flat plate) having a size of 40 mm in length × 25 mm in width and a thickness H of 2.0 mm was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 1.

[Example 4]

In the present example, resin pellets were produced in the entirely same manner as in Example 1, except that the glass content C was 50% by mass. Then, a glass fiber-reinforced resin plate (flat plate) having a size of 40 mm in length × 25 mm in width and a thickness H of 2.0 mm was produced in the entirely same manner as in Example 1, except that the resin pellets obtained in the present example were used.

Then, as for the glass fiber-reinforced resin plate (flat plate) obtained in the present example, the flexural modulus in the TD direction and the flexural modulus in the MD direction were each measured in the entirely same manner as in Example 1, and the number average fiber length L of the glass fiber in the glass fiber-reinforced resin plate was calculated.

The results are shown in Table 2.

[Reference Example 4]

The present reference example is a reference example corresponding to Example 4, and resin pellets were produced in the entirely same manner as in Reference Example 1, except that the glass content C was 50% by mass. Then, a glass fiber-reinforced resin plate (flat plate) having a size of 40 mm in length $\times$ 25 mm in width and a thickness H of 2.0 mm was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 2.

[Example 5]

In the present example, resin pellets were produced in the entirely same manner as in Example 1, except that polybutylene terephthalate (manufactured by Polyplastics Co., Ltd., trade name: DURANEX 2000, described as PBT in Table 2) was used and the glass content C was 30% by mass. Then, a glass fiber-reinforced resin plate (flat plate) having a size of 40 mm in length $\times$ 25 mm in width and a thickness H of 2.0 mm was produced in the entirely same manner as in Example 1, except that the resin pellets obtained in the present example were used, the mold temperature was 90°C, and the injection temperature was 250°C.

Then, as for the glass fiber-reinforced resin plate (flat plate) obtained in the present example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 2.

[Reference Example 5]

The present reference example is a reference example corresponding to Example 5, and resin pellets were produced in the entirely same manner as in Reference Example 1, except that polybutylene terephthalate (manufactured by Polyplastics Co., Ltd., trade name: DURANEX 2000, described as PBT in Table 2) was used and the glass content C was 30% by mass. Then, a glass fiber-reinforced resin plate (flat plate) having a size of 40 mm in length $\times$ 25 mm in width and a thickness H of 2.0 mm was produced in the entirely same manner as in Example 1, except that the resin pellets obtained in the present example were used, the mold temperature was 90°C, and the injection temperature was 250°C.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 2.

[Example 6]

In the present example, resin pellets were produced in the entirely same manner as in Example 1, except that polyphenylene sulfide (manufactured by KUREHA CORPORATION, trade name: Fortron KPS W203A, described as PPS in Table 2) was used and the glass content C was 40% by mass. Then, a glass fiber-reinforced resin plate (flat plate) having a size of 20 mm in length $\times$ 25 mm in width and a thickness H of 1.0 mm was produced in the entirely same manner as in Example 1, except that the resin pellets obtained in the present example were used, the mold temperature was 140°C, and the injection temperature was 310°C.

Then, as for the glass fiber-reinforced resin plate (flat plate) obtained in the present example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 2.

[Reference Example 6]

The present reference example is a reference example corresponding to Example 6, and resin pellets were produced in the entirely same manner as in Reference Example 1, except that polyphenylene sulfide (manufactured by KUREHA CORPORATION, trade name: Fortron KPS W203A, described as PPS in Table 2) was used and the glass content C was 40% by mass. Then, a glass fiber-reinforced resin plate (flat plate) having a size of 20 mm in length × 25 mm in width and a thickness H of 1.0 mm was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 2.

[Comparative Example 1]

In the present comparative example, resin pellets were produced in the entirely same manner as in Example 1, except that the glass content C was 30% by mass. Then, a glass fiber-reinforced resin plate (flat plate) having a size of 20 mm in length × 25 mm in width and a thickness H of 0.8 mm was produced in the entirely same manner as in Example 1, except that the resin pellets obtained in the present comparative example were used.

Then, as for the glass fiber-reinforced resin plate (flat plate) obtained in the present comparative example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 3.

[Reference Example 7]

The present reference example is a reference example corresponding to Comparative Example 1, and resin pellets were produced in the entirely same manner as in Reference Example 1, except that the glass content C was 30% by mass. Then, a glass fiber-reinforced resin plate (flat plate) having a size of 20 mm in length × 25 mm in width and a thickness H of 0.8 mm was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 3.

[Comparative Example 2]

In the present comparative example, resin pellets were produced in the entirely same manner as in Example 1, except that the glass content C was 10% by mass. Then, a glass fiber-reinforced resin plate (flat plate) having a size of 40 mm in length × 25 mm in width and a thickness H of 2.0 mm was produced in the entirely same manner as in Example 1, except that the resin pellets obtained in the present comparative example were used.

Then, as for the glass fiber-reinforced resin plate (flat plate) obtained in the present comparative example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 3.

[Reference Example 8]

The present reference example is a reference example corresponding to Comparative Example 2, and resin pellets were produced in the entirely same manner as in Reference Example 1, except that the glass content C was 10% by mass. Then, a glass fiber-reinforced resin plate (flat plate) having a size of 40 mm in length × 25 mm in width and a thickness H of 2.0 mm was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 3.

[Comparative Example 3]

In the present comparative example, resin pellets were produced in the entirely same manner as in Example 1, except that the glass content C was 70% by mass. Then, a glass fiber-reinforced resin plate (flat plate) having a size of 40

mm in length $\times$ 25 mm in width and a thickness H of 2.0 mm was produced in the entirely same manner as in Example 1, except that the resin pellets obtained in the present comparative example were used.

Then, as for the glass fiber-reinforced resin plate (flat plate) obtained in the present comparative example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 3.

[Reference Example 9]

The present reference example is a reference example corresponding to Comparative Example 3, and resin pellets were produced in the entirely same manner as in Reference Example 1, except that the glass content C was 70% by mass. Then, a glass fiber-reinforced resin plate (flat plate) having a size of 40 mm in length $\times$ 25 mm in width and a thickness H of 2.0 mm was produced in the entirely same manner as in Example 1, except that the resin pellets obtained in the present reference example were used.

Then, as for the glass fiber-reinforced resin plate (flat plate) obtained in the present reference example, the flexural modulus in the TD direction and the flexural modulus in the MD direction were each measured in the entirely same manner as in Example 1, and the number average fiber length L of the glass fiber in the glass fiber-reinforced resin plate was calculated. The results are shown in Table 3.

[Comparative Example 4]

In the present comparative example, resin pellets were produced in the entirely same manner as in Example 1, except that polycarbonate (manufactured by TEIJIN LIMITED., trade name: Panlite L-1250Y, described as PC in Table 3) was used and the glass content C was 30% by mass. Then, a glass fiber-reinforced resin plate (flat plate) having a size of 20 mm in length $\times$ 25 mm in width and a thickness H of 0.8 mm was produced in the entirely same manner as in Example 1, except that the resin pellets obtained in the present comparative example were used, the mold temperature was 110°C, and the injection temperature was 290°C.

Then, as for the glass fiber-reinforced resin plate (flat plate) obtained in the present comparative example, the flexural modulus in the TD direction and the flexural modulus in the MD direction were each measured in the entirely same manner as in Example 1, and the number average fiber length L of the glass fiber in the glass fiber-reinforced resin plate was calculated. The total light transmittance was measured by the method described below. The results are shown in Table 3.

[Total light transmittance]

The glass fiber-reinforced resin plate was processed into a size of 30 mm in width $\times$ 30 mm in length to obtain a test piece. Then, as for the obtained test piece, the total light transmittance was measured in accordance with JIS K 7375:2008 using a spectrometer (manufactured by Hitachi High-Technologies Corporation, trade name: spectrometer U-3900).

[Reference Example 10]

The present reference example is a reference example corresponding to Comparative Example 4, and resin pellets were produced in the entirely same manner as in Reference Example 1, except that polycarbonate PC (manufactured by TEIJIN LIMITED., trade name: Panlite L-1250Y, described as PC in Table 3) was used and the glass content C was 20% by mass. Then, a glass fiber-reinforced resin plate (flat plate) having a size of 20 mm in length $\times$ 25 mm in width and a thickness H of 1.0 mm was produced in the entirely same manner as in Example 1, except that the resin pellets obtained in the present reference example were used, the mold temperature was 110°C, and the injection temperature was 290°C.

Then, as for the glass fiber-reinforced resin plate (flat plate) obtained in the present reference example, the flexural modulus in the TD direction, the flexural modulus in the MD direction, and the total light transmittance were each measured in the entirely same manner as in Comparative Example 4, and the number average fiber length L of the glass fiber in the glass fiber-reinforced resin plate was calculated. The results are shown in Table 3.

[Table 1]

| | | Example 1 | Reference Example 1 | Example 2 | Reference Example 2 | Example 3 | Reference Example 3 |
|---|---|---|---|---|---|---|---|
| Glass fiber | Major axis (μm) | 34.1 | 28.0 | 34.1 | 28.0 | 34.1 | 28.0 |
| | Minor axis (μm) | 5.7 | 7.0 | 5.7 | 7.0 | 5.7 | 7.0 |
| | Converted fiber diameter | 15.4 | 15.4 | 15.4 | 15.4 | 15.4 | 15.4 |
| | Major axis/minor axis R | 6.0 | 4.0 | 6.0 | 4.0 | 6.0 | 4.0 |
| Resin | Resin type | PA | PA | PA | PA | PA | PA |
| Glass fiber-reinforced resin plate | Glass content C (% by mass) | 40 | 40 | 50 | 50 | 30 | 30 |
| | Thickness H (mm) | 1.0 | 1.0 | 1.0 | 1.0 | 2.0 | 2.0 |
| | Number average fiber length L (μm) | 279 | 291 | 253 | 270 | 330 | 362 |
| | C × H | 40 | 40 | 50 | 50 | 60 | 60 |
| | $(C/L)^{(1/2)} \times H$ | 0.38 | 0.37 | 0.44 | 0.43 | 0.60 | 0.58 |
| Flexural modulus in TD direction (GPa) | | 6.48 | 6.01 | 7.21 | 6.51 | 6.42 | 5.25 |
| Flexural modulus in MD direction (GPa) | | 8.74 | 8.64 | 11.4 | 10.8 | 7.51 | 7.03 |
| Improvement rate of flexural modulus in TD direction (%) | | 7.8 | - | 10.8 | - | 22.3 | - |
| Improvement rate of flexural modulus in MD direction (%) | | 1.2 | | 5.6 | | 6.8 | |
| Anisotropy | | 0.74 | 0.70 | 0.63 | 0.60 | 0.85 | 0.75 |
| Flexural modulus improvement rate difference (%) | | 6.6 | - | 5.2 | - | 15.5 | - |
| Anisotropy improvement rate (%) | | 6.6 | - | 4.9 | - | 14.5 | - |

# EP 4 119 610 B1

[Table 2]

| | | | Example 4 | Reference Example 4 | Example 5 | Reference Example 5 | Example 6 | Reference Example 6 |
|---|---|---|---|---|---|---|---|---|
| Glass fiber | Major axis ($\mu$m) | | 34.1 | 28.0 | 34.1 | 28.0 | 34.1 | 28.0 |
| | Minor axis ($\mu$m) | | 5.7 | 7.0 | 5.7 | 7.0 | 5.7 | 7.0 |
| | Converted fiber diameter | | 15.4 | 15.4 | 15.4 | 15.4 | 15.4 | 15.4 |
| | | Major axis/minor axis R | 6.0 | 4.0 | 6.0 | 4.0 | 6.0 | 4.0 |
| Resin | | Resin type | PA | PA | PBT | PBT | PPS | PPS |
| Glass fiber-reinforced resin plate | | Glass content C (% by mass) | 50 | 50 | 30 | 30 | 40 | 40 |
| | | Thickness H (mm) | 2.0 | 2.0 | 2.0 | 2.0 | 1.0 | 1.0 |
| | | Number average fiber length L ($\mu$m) | 262 | 294 | 301 | 314 | 369 | 318 |
| | | C $\times$ H | 100 | 100 | 60 | 60 | 40 | 40 |
| | | (C/L)$^{(1/2)}$ $\times$ H | 0.87 | 0.82 | 0.63 | 0.62 | 0.33 | 0.35 |
| Flexural modulus in TD direction (GPa) | | | 9.69 | 9.21 | 6.19 | 5.55 | 9.88 | 9.24 |
| Flexural modulus in MD direction (GPa) | | | 12.1 | 11.8 | 7.18 | 7.29 | 12.6 | 12.1 |
| Improvement rate of flexural modulus in TD direction (%) | | | 5.2 | - | 11.5 | - | 6.9 | - |
| Improvement rate of flexural modulus in MD direction (%) | | | 2.5 | | -1.5 | | 4.1 | |
| Anisotropy | | | 0.80 | 0.78 | 0.86 | 0.76 | 0.78 | 0.76 |
| Flexural modulus improvement rate difference (%) | | | 2.7 | - | 13.0 | - | 2.8 | - |
| Anisotropy improvement rate (%) | | | 2.6 | - | 13.2 | - | 2.7 | - |

18

[Table 3]

| | | Comparative Example 1 | Reference Example 7 | Comparative Example 2 | Reference Example 8 | Comparative Example 3 | Reference Example 9 | Comparative Example 4 | Reference Example 10 |
|---|---|---|---|---|---|---|---|---|---|
| Glass fiber | Major axis (μm) | 34.1 | 28.0 | 34.1 | 28.0 | 34.1 | 28.0 | 34.1 | 28.0 |
| | Minor axis (μm) | 5.7 | 7.0 | 5.7 | 7.0 | 5.7 | 7.0 | 5.7 | 7.0 |
| | Converted fiber diameter | 15.4 | 15.4 | 15.4 | 15.4 | 15.4 | 15.4 | 15.4 | 15.4 |
| | Major axis/minor axis R | 6.0 | 4.0 | 6.0 | 4.0 | 6.0 | 4.0 | 6.0 | 4.0 |
| Resin | Resin type | PA | PA | PA | PA | PA | PA | PC | PC |
| Glass fiber-reinforced resin plate | Glass content C (%by mass) | 30 | 30 | 10 | 10 | 70 | 70 | 30 | 30 |
| | Thickness H (mm) | 0.8 | 0.8 | 2.0 | 2.0 | 2.0 | 2.0 | 0.8 | 0.8 |
| | Number average fiber length L (μm) | 302 | 314 | 515 | 648 | 198 | 205 | 302 | 334 |
| | C × H | 24 | 24 | 20 | 20 | 140 | 140 | 24 | 24 |
| | (C/L)$^{(1/2)}$ × H | 0.25 | 0.25 | 0.28 | 0.25 | 1.19 | 1.17 | 0.25 | 0.24 |
| Flexural modulus in TD direction (GPa) | | 4.64 | 4.63 | 3.27 | 3.15 | 16.2 | 15.8 | 5.61 | 5.51 |
| Flexural modulus in MD direction (GPa) | | 6.07 | 6.29 | 4.03 | 4.03 | 20.7 | 20.8 | 7.48 | 7.12 |
| Improvement rate of flexural modulus in TD direction (%) | | 0.2 | - | 3.8 | - | 2.5 | - | 1.8 | - |

| | Comparative Example 1 | Reference Example 7 | Comparative Example 2 | Reference Example 8 | Comparative Example 3 | Reference Example 9 | Comparative Example 4 | Reference Example 10 |
|---|---|---|---|---|---|---|---|---|
| Improvement rate of flexural modulus in MD direction (%) | -3.5 | | 0.0 | | -0.5 | | 5.1 | |
| Anisotropy | 0.76 | 0.74 | 0.81 | 0.78 | 0.78 | 0.76 | 0.75 | 0.77 |
| Flexural modulus improvement rate difference (%) | 3.7 | | 3.8 | | 3.0 | | -3.2 | |
| Anisotropy improvement rate (%) | 3.8 | - | 3.8 | - | 3.0 | - | -3.1 | - |
| Total light transmittance (%) | - | - | - | - | - | - | 28.3 | 25.7 |

As seen in Tables 1 to 3, according to the glass fiber-reinforced resin plates of Example 1 to Example 6 in which the product (H × C) of the glass fiber content C and the thickness H in the glass fiber-reinforced resin plate satisfies the above formula (1), the improvement rates of the flexural modulus in the TD direction to the flexural modulus in the TD direction of each corresponding reference example are 5.2 to 22.3%, and thus it is demonstrated that the elastic modulus in the TD direction can be improved.

In contrast, as seen in Tables 1 to 3, according to the glass fiber-reinforced resin plates of Comparative Examples 1, 2, and 4 in which the product (H × C) of the glass fiber content C and the thickness H in the glass fiber-reinforced resin plate is below the range of the formula (1), and the glass fiber-reinforced resin plate of Comparative Example 3 in which the product (H × C) of the glass fiber content C and the thickness H in the glass fiber-reinforced resin plate is above the range of the formula (1), the improvement rates of the flexural modulus in the TD direction to the flexural modulus in the TD direction (GPa) of each corresponding reference example are 0.2 to 3.8%, and thus it is demonstrated that the elastic modulus in the TD direction cannot be improved as compared with that in the glass fiber-reinforced resin plates of Example 1 to Example 6.

## Claims

1.  A glass fiber-reinforced resin plate comprising glass fiber having a flat cross-sectional shape and a resin, wherein

    the glass fiber having the flat cross-sectional shape has a minor axis in a range of 4.5 to 10.5 $\mu$m, a major axis in a range of 22.0 to 80.0 $\mu$m, and a ratio of the major axis to the minor axis (major axis/minor axis) R in a range of 5.5 to 6.5 determined as described in the specification;
    a glass fiber content C in the glass fiber-reinforced resin plate is in a range of 5.0 to 75.0% by mass;
    a number average fiber length L of the glass fiber included in the glass fiber-reinforced resin plate is in the range of 100 to 700 $\mu$m;
    a thickness H of the glass fiber-reinforced resin plate is in a range of more than 0.5 mm and 10.0 mm or less;
    the C, L and H satisfy a following formula (a):

    $$0.31 \leq (C/L)^{(1/2)} \times H \leq 1.01 \qquad \dots (a);$$

    and
    the C and H satisfy a following formula (1):

    $$30.0 \leq H \times C \leq 120.0 \qquad \dots (1).$$

2.  The glass fiber-reinforced resin plate according to claim 1, wherein the glass fiber content C is in a range of 20.0 to 60.0% by mass, the thickness H of the glass fiber-reinforced resin plate is in a range of 0.8 to 8.0 mm, and the C and H satisfy a following formula (2):

    $$45.0 \leq H \times C \leq 80.0 \qquad \dots (2).$$

3.  The glass fiber-reinforced resin plate according to claim 1 or 2, wherein the glass fiber content C is in a range of 20.0 to 40.0% by mass, the thickness H of the glass fiber-reinforced resin plate is in a range of 1.6 to 5.0 mm, and the C and H satisfy a following formula (3):

    $$55.0 \leq H \times C \leq 74.5 \qquad \dots (3).$$

4.  The glass fiber-reinforced resin plate according to any one of claims 1 to 3, wherein the resin contained in the glass fiber-reinforced resin plate is a crystalline thermoplastic resin.

5.  The glass fiber-reinforced resin plate according to any one of claims 1 to 4, wherein the resin contained in the glass fiber-reinforced resin plate is polyamide.

**Patentansprüche**

1. Glasfaserverstärkte Harzplatte, die Glasfasern mit einer flachen Querschnittsform und ein Harz umfasst, wobei

   die Glasfasern mit der flachen Querschnittsform eine Nebenachse in einem Bereich von 4,5 bis 10,5 $\mu$m, eine Hauptachse in einem Bereich von 22,0 bis 80,0 $\mu$m und ein Verhältnis der Hauptachse zu der Nebenachse (Hauptachse/Nebenachse) R in einem Bereich von 5,5 bis 6,5 gemäß Bestimmung in der Beschreibung aufweisen;
   ein Glasfasergehalt C in der glasfaserverstärkten Harzplatte in einem Bereich von 5,0 bis 75,0 Massen-% liegt;
   die zahlenmittlere Faserlänge L der in der glasfaserverstärkten Harzplatte enthaltenen Glasfasern in einem Bereich von 100 bis 700 $\mu$m liegt;
   eine Dicke H der glasfaserverstärkten Harzplatte in einem Bereich von mehr als 0,5 mm und 10,0 mm oder weniger liegt;
   die Werte C, L und H eine folgende Formel (a) erfüllen:

$$0,31 \leq (C/L)^{(1/2)} \times H \leq 1,01 \quad ...(a);$$

   und wobei
   C und H eine folgende Formel (1) erfüllen:

$$30,0 \leq H \times C \leq 120,0 \quad ...(1).$$

2. Glasfaserverstärkte Harzplatte nach Anspruch 1, wobei der Glasfasergehalt C in einem Bereich von 20,0 bis 60,0 Massen-% liegt, die Dicke H der glasfaserverstärkten Harzplatte in einem Bereich von 0,8 bis 8,0 mm liegt und C und H eine folgende Formel (2) erfüllen:

$$45,0 \leq H \times C \leq 80,0 \quad ...(2).$$

3. Glasfaserverstärkte Harzplatte nach Anspruch 1 oder 2, wobei der Glasfasergehalt C in einem Bereich von 20,0 bis 40,0 Massen-% liegt, die Dicke H der glasfaserverstärkten Harzplatte in einem Bereich von 1,6 bis 5,0 mm liegt und C und H eine folgende Formel (3) erfüllen:

$$55,0 \leq H \times C \leq 74,5 \quad ...(3).$$

4. Glasfaserverstärkte Harzplatte nach einem der Ansprüche 1 bis 3, wobei das in der glasfaserverstärkten Harzplatte enthaltene Harz ein kristallines thermoplastisches Harz ist.

5. Glasfaserverstärkte Harzplatte nach einem der Ansprüche 1 bis 4, wobei das in der glasfaserverstärkten Harzplatte enthaltene Harz Polyamid ist.

**Revendications**

1. Plaque en résine renforcée de fibres de verre comprenant des fibres de verre de section transversale plate et une résine, dans laquelle

   la fibre de verre ayant une forme de section transversale plate a un axe mineur dans une plage de 4,5 à 10,5 $\mu$m, un axe majeur dans une plage de 22,0 à 80,0 $\mu$m et un rapport de l'axe majeur à l'axe mineur (axe majeur/axe mineur) R dans une plage de 5,5 à 6,5, déterminé tel que décrit dans la description ;
   la teneur en fibres de verre C dans la plaque de résine renforcée de fibres de verre se situe dans une plage de 5,0 à 75,0 % en masse ;
   la longueur moyenne en nombre L des fibres de verre contenues dans la plaque de résine renforcée de fibres de verre se situe dans une plage de 100 à 700 $\mu$m ;
   l'épaisseur H de la plaque en résine renforcée de fibres de verre est comprise entre plus de 0,5 mm et 10,0 mm ou moins ; et

les valeurs de C, L et H satisfont la formule suivante (a) :

$$0{,}31 \leq (C/L)^{1/2} \times H \leq 1{,}01 \qquad (a) \; ;$$

et
les valeurs de C et H satisfont la formule suivante (1) :

$$30{,}0 \leq H \times C \leq 120{,}0 \qquad (1)$$

2. Plaque en résine renforcée de fibres de verre selon la revendication 1, dans laquelle la teneur en fibres de verre C est comprise entre 20,0 et 60,0 % en masse, l'épaisseur H de la plaque est comprise entre 0,8 et 8,0 mm, et C et H satisfont à la formule (2) :

$$45{,}0 \leq H \times C \leq 80{,}0 \qquad (2).$$

3. Plaque en résine renforcée de fibres de verre selon la revendication 1 ou 2, dans laquelle la teneur en fibres de verre C est comprise entre 20,0 et 40,0 % en masse, l'épaisseur H de la plaque en résine renforcée de fibres de verre est comprise entre 1,6 et 5,0 mm, et C et H satisfont à la formule (3) :

$$55{,}0 \leq H \times C \leq 74{,}5 \qquad (3).$$

4. Plaque en résine renforcée de fibres de verre selon l'une quelconque des revendications 1 à 3, dans laquelle la résine contenue dans la plaque en résine renforcée de fibres de verre est une résine thermoplastique cristalline.

5. Plaque en résine renforcée de fibres de verre selon l'une quelconque des revendications 1 à 4, dans laquelle la résine contenue dans la plaque en résine renforcée de fibres de verre est du polyamide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013103981 A
- JP 2009292953 A
- JP 2010222486 A
- US 2015080516 A1

- WO 2020004597 A1
- US 2010009158 A1
- JP 2010084007 A
- WO 2018182038 A